Europäisches Patentamt

European Patent Office

Office européen des brevets

(19)

(11) Numéro de publication: **0 053 543**
**B1**

## (12) FASCICULE DE BREVET EUROPEEN

(45) Date de publication du fascicule du brevet:
**12.03.86**

(21) Numéro de dépôt: **81401834.7**

(22) Date de dépôt: **19.11.81**

(51) Int. Cl.⁴: **F 16 B 37/04**

(54) Perfectionnements aux dispositifs pour fixer des objets sur des tôles accessibles d'un seul côté.

(30) Priorité: **01.12.80 FR 8025481**

(43) Date de publication de la demande:
**09.06.82 Bulletin 82/23**

(45) Mention de la délivrance du brevet:
**12.03.86 Bulletin 86/11**

(84) Etats contractants désignés:
**AT BE DE GB IT NL SE**

(56) Documents cités:
**FR - A - 1 486 531**
**FR - A - 1 520 165**
**FR - A - 2 135 463**
**FR - A - 2 450 968**

(73) Titulaire: **COMPAGNIE DE MATERIEL ET D'EQUIPEMENTS TECHNIQUES C.O.M.E.T., 27, Avenue Etienne Audibert, F-60304 Senlis Cedex (FR)**

(72) Inventeur: **Moryl, Richard, 10, Avenue Marie Eugénie, F-95600 Eaubonne (FR)**
Inventeur: **Bouery, Roger, Rue Parmain La Naze, F-95760 Valmondois (FR)**

(74) Mandataire: **Behaghel, Pierre et al, CABINET PLASSERAUD 84 rue d'Amsterdam, F-75009 Paris (FR)**

**Description**

L'invention est relative aux dispositifs pour fixer des objets par vissage sur des supports, tels que des tôles, «aveugles», c'est-à-dire accessibles d'un seul côté et perforés de trous appropriés destinés à être traversés en partie par les dispositifs en question, ainsi qu'il est fréquemment requis dans le domaine des carrosseries de véhicules routiers, ferroviaires, aéronautiques ou autres, ou même dans le domaine des arts ménagers ou du mobilier métallique.

Elle vise plus particulièrement, parmi les dispositifs de fixation du genre en question, ceux qui comprennent une cage monobloc contenant au moins en partie une pièce filetée destinée à coopérer par vissage avec une pièce filetée complémentaire pour assurer la fixation désirée, ladite cage comportant une douille cylindrique ou prismatique de section assez petite pour pouvoir être introduite dans les trous de montage de la tôle ou support analogue, l'une des extrémités de cette douille étant prolongée transversalement par une collerette propre à prendre appui sur les bords desdits trous à la fin de l'introduction dans ceux-ci de ladite douille.

Les dispositifs de fixation connus de ce type présentent un certain nombre d'avantages.

Mais ils exigent en général des formes compliquées pour les trous de montage, chaque trou devant avoir notamment la forme d'une fente allongée à bords parallèles ou encore celle d'un cercle prolongé radialement vers l'extérieur par deux encoches (voir FR.A. 2 135 463).

La présente invention a pour but, entre autres, de supprimer cette exigence en permettant le montage des dispositifs de fixation considérés dans des trous de forme carrée.

A cet effet, selon l'invention, les dispositifs de fixation du genre en question sont caractérisés:

– en ce que la pièce filetée comprend quatre oreilles radiales identiques s'étendant selon deux directions diamétralement perpendiculaires entre elles et dont le profil est tel que le croisillon formé puisse être introduit avec un faible jeu dans les trous carrés à équiper,

– en ce que la douille constitutive de leur cage présente une section transversale inscriptible dans un octogone régulier lui-même propre à être introduit avec un léger jeu dans les trous carrés à équiper et est évidée par quatre fenêtres longitudinales identiques décalées angulairement de 90 degrés entre elles et propres à recevoir jointivement chacune l'une des quatre oreilles de la pièce filetée,

– et en ce que des moyens sont prévus pour rendre possible une rotation de 45° de la pièce filetée dans le sens du vissage sur elle de la pièce filetée complémentaire entre l'instant de l'introduction de ladite pièce filetée dans un trou carré à équiper et au plus la fin du vissage de la pièce filetée complémentaire sur cette pièce.

Dans des modes de réalisation préférés, on a recours en outre à l'une et/ou à l'autre des dispositions suivantes:

– dans un dispositif de fixation du genre en question pour lequel la douille se présente sous la forme générale d'un prisme à base octogonale, les moyens pour rendre possible la rotation de 45° de la pièce filetée comprennent des amincissements pratiqués dans l'une seulement des deux moitiés de chacune des quatre portions non évidées de la paroi latérale de la douille, ces moitiés étant considérées selon une direction périphérique,

– dans un dispositif de fixation du genre en question pour lequel la douille se présente sous la forme générale d'un prisme à base octogonale, les moyens pour rendre possible la rotation de 45° de la pièce filetée comprennent, sur la face extérieure des portions de paroi latérale non évidées de cette douille, des plages cylindriques arrondies centrées sur l'axe de la douille, ces plages s'étendant sur une moitié, de chacune desdites portions, considérée selon une direction périphérique,

– les moyens pour rendre possible la rotation de 45° de la pièce filetée comprennent des nervures obliques prévues sur les faces extérieures des portions non évidées de la paroi latérale de la douille, nervures propres à coopérer avec les bords des trous carrés à équiper de manière à chasser angulairement la douille lors de son introduction axiale dans un tel trou et à lui faire décrire automatiquement un angle de 45° au cours de cette introduction,

– les moyens pour rendre possible la rotation de 45° de la pièce filetée sont constitués par la forme inclinée donnée aux quatre fenêtres évidées dans la douille de façon telle que, lorsque les oreilles de la pièce filetée glissent le long de ces fenêtres par suite du vissage de la pièce filetée complémentaire sur elle, ladite pièce décrive un angle de 45°,

– la collerette comporte au moins deux ailes élastiquement flexibles pliées du côté de la douille et propres à prendre appui élastiquement contre la tôle évidée par le trou carré à équiper,

– la cage comporte deux bossages plats de section droite triangulaire faisant saillie axialement sous la collerette et propres à être introduits jointivement dans deux coins opposés du trou carré à équiper après que la pièce filetée et la cage qui la contient aient subi une rotation de 45° consécutivement à leur introduction axiale commune dans ce trou carré.

L'invention comprend, mises à part ces dispositions principales, certaines autres dispositions qui s'utilisent de préférence en même temps et dont il sera plus explicitement question ci-après.

Dans ce qui suit l'on va décrire des modes de réalisation préférés de l'invention en se référant aux dessins ci-annexés d'une manière bien entendu non limitative.

Les fig. 1 et 2, de ces dessins, montrent respectivement en vue latérale, tôle coupée, et en vue transversale selon II–II, fig. 1, l'ensemble d'une tôle perforée par un trou carré et d'un dispositif de fixation établi selon l'invention et en cours de montage dans ce trou.

La fig. 3 montre le même dispositif vu en bout selon la flèche III de la fig. 1.

La fig. 4 montre, semblablement à la fig. 1, une variante d'un tel ensemble conforme à l'invention.

Les fig. 5 et 7 montrent la cage correspondante seule, en coupe transversale, selon V–V, fig. 4, et en vue en bout selon la flèche VII de la figure 4.

La fig. 6 est une coupe du dispositif de fixation de la fig. 4 selon VI–VI.

La fig. 8 montre, en vue latérale, une autre variante de dispositif de fixation selon l'invention.

La fig. 9 est une coupe transversale de la cage de ce dispositif en cours d'introduction dans un trou carré.

Les fig. 10 et 11 montrent respectivement en vue latérale, tôle coupée, et en vue en bout selon la flèche XI de la fig. 10, encore une autre variante d'un ensemble d'une tôle perforée et d'un dispositif de fixation conforme à l'invention monté dans un trou de cette tôle.

Les fig. 12 et 13 illustrent un perfectionnement de la douille conforme aux fig. 4 à 7, cette douille étant visible respectivement en coupe transversale partielle et en vue latérale.

Dans chaque cas, la tôle à équiper 1 est perforée par un trou carré 2 et le dispositif de fixation comprend:

– une cage monobloc composée d'une douille 3 cylindrique ou prismatique et d'une collerette 4 prolongeant transversalement une extrémité de la douille, l'autre extrémité de cette douille étant fermée par un fond 5, de préférence évidé en son centre par un trou circulaire 6,
– et une pièce filetée 7 dont au moins une partie est logée dans la douille 3, pièce propre à coagir à des fins de vissage avec une pièce filetée complémentaire (non représentée) pour assurer la fixation désirée.

La cage est généralement constituée en une matière plastique suffisamment dure et élastique telle qu'une polyamide, mais elle pourrait également être constituée en métal.

La section transversale de la douille 3 est délimitée extérieurement par un octogone régulier susceptible d'être introduit avec un léger jeu dans le trou 2 ou par une courbe fermée inscriptible dans un tel octogone.

Quatre des huit faces latérales de la douille, décalées angulairement les unes par rapport aux autres de 90° autour de l'axe de cette douille, sont évidées par quatre fenêtres 8 identiques entre elles, allongées longitudinalement. Les largeurs de ces fenêtres sont presque aussi grandes que celles des faces dans lesquelles elles sont évidées.

La pièce filetée 7, qui est un écrou ou un goujon, est généralement constituée en un métal mais pourrait être également constituée en une matière plastique suffisamment dure.

Cette pièce filetée comprend quatre oreilles radiales identiques 9 décalées angulairement entre elles de 90° de façon à former un croisillon.

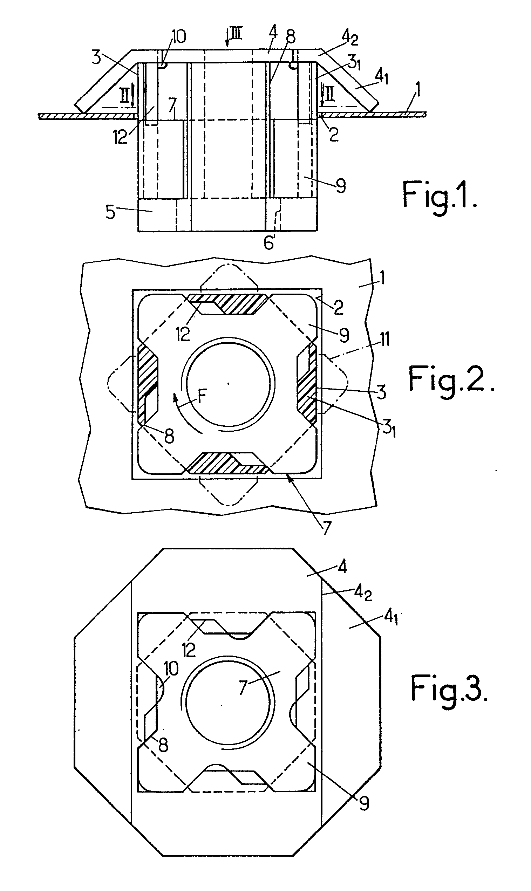

Chacune de ces oreilles 9 est dimensionnée de façon à traverser jointivement l'une des fenêtres 8 et l'on donne à son extrémité la forme générale d'un dièdre à angle droit de façon telle que le croisillon considéré puisse être introduit avec un léger jeu dans le trou carré 2. L'arête de chaque dièdre terminal est de préférence chanfreinée ou arrondie comme visible sur les fig. 2 et 3.

Le croisillon formé par les oreilles 9 est délimité par deux plans transversaux. Il s'étend sur toute l'épaisseur axiale de la pièce filetée 7 si celle-ci est un écrou. Si cette pièce est un goujon, le croisillon en question constitue simplement la tête de ce goujon.

Les fenêtres 8 destinées à guider les coulissements axiaux des oreilles 9 sont évidées jusqu'à l'extrémité, de la douille 3, opposée à son fond 5 de façon à permettre l'introduction axiale dans cette douille de la pièce filetée 7 à croisillon à travers cette extrémité.

Pour empêcher le dégagement axial involontaire de la pièce 7 hors de la douille, on prévoit avantageusement des tétons 10 faisant légèrement saillie à l'intérieur de cette douille sensiblement au niveau de la collerette 4: ces tétons et/ou les portions de paroi qui les entourent sont légèrement déformés radialement par la pièce 7 lors de son introduction dans la douille et c'est ensuite en raison de leur retour élastique en position de repos que lesdits tétons forment obstacle à la sortie fortuite de la pièce 7.

Il résulte de l'exposé ci-dessus que le dispositif de fixation constitué par la cage et par la pièce filetée à croisillon qu'elle contient présente, au niveau de cette pièce filetée, un contour transversal sensiblement carré (voir fig. 2) légèrement plus petit que le bord carré du trou 2.

On peut donc facilement introduire ce dispositif axialement dans ce trou.

Pour assurer les fixations désirées avec le dispositif en question, il faut ensuite faire tourner le croisillon de 45° de façon telle que, lors du serrage dû au vissage de la pièce 7 sur la pièce filetée complémentaire, les extrémités de ses quatre oreilles 9 viennent porter axialement contre les milieux des plages, de la tôle 1, longeant les quatre côtés du trou carré 1: ces plages ont été schématisées en traits mixtes et désignées par la référence 11 sur la fig. 2.

De nombreuses formules peuvent être envisagées pour rendre possible cette rotation du croisillon de 45°, et de 45° seulement.

Dans le mode de réalisation des fig. 1 à 3, on a aminci à cet effet, au voisinage axial de la collerette 4, une moitié de chacune des quatre parois $3_1$, de la douille 3, délimitant les fenêtres 8: cette moitié est localisée dans la zone, de chaque paroi, qui vient en contact avec un côté du trou carré 2 lorsqu'on sollicite l'ensemble 3, 7 dans le sens du vissage depuis l'extrémité ouverte de la douille.

Les creux matérialisant ces amincissements ont été désignés par la référence 12 sur les fig. 1 à 3.

Dans ces conditions, il est possible de faire tourner le dispositif dans le sens indiqué du vissage, c'est-à-dire dans le sens horaire sur la fig. 2 (flèche F), moyennant une légère flexion radiale des portions amincies de la douille, lesquelles se trouvent à cet effet à une distance axiale suffisante de la zone de la douille occupée par la pièce 7.

Lorsque l'amplitude angulaire de ce déplacement atteint 45°, on observe automatiquement un arrêt de ce déplacement par butée angulaire des portions épaisses des parois $3_1$ contre les côtés du trou carré 2.

La pièce est alors en place pour assurer la fixation par vissage désirée.

Il suffit à cet effet de placer sur la collerette 4 l'élément que l'on désire fixer sur la tôle 1 en alignant une lumière de cet élément avec l'axe de la douille, puis de visser depuis l'extérieur sur la pièce 7 la pièce filetée complémentaire, l'une de ces deux pièces traversant alors ladite lumière: ce vissage rapproche axialement la pièce 7 de la tôle 1 jusqu'à butée axiale de ses oreilles 9 contre les plages 11 de cette tôle, ainsi qu'exposé plus haut.

Cette application axiale est répartie sur une surface relativement importante et régulièrement distribuée autour de l'axe de l'ensemble, ce qui assure un accrochage très solide de la pièce 7, et donc de l'élément à fixer, sur la tôle 1.

Dans le mode de réalisation des fig. 1 à 3, on a fait comprendre à la collerette 4 deux ailes $4_1$ pliées en direction de la tôle 1 et susceptibles de fléchir élastiquement autour de leurs arêtes de pliage $4_2$.

Cette disposition présente l'avantage de supprimer automatiquement les jeux de montage du fait que l'application élastique des bords des ailes $4_1$ contre la face extérieure de la tôle 1 assure une application axiale élastique des oreilles 9 contre l'autre face de cette tôle, même pour la position d'attente du dispositif, c'est-à-dire après sa mise en place sur la tôle mais avant le vissage auquel il est destiné.

Cette introduction permet également de monter le dispositif sur des tôles d'épaisseurs très différentes, un accroissement d'épaisseur de tôle se traduisant simplement par une réduction de l'angle de pliage des ailes $4_1$.

Avec une telle construction, le montage du dispositif sur le trou carré 2 exige au cours de la phase finale de l'introduction axiale de ce dispositif dans ce trou, l'exercice d'une poussée axiale sur la cage, destinée à écraser légèrement la collerette 4 en faisant fléchir ses ailes $4_1$, exercice qui doit être maintenu lors de la rotation subséquente de 45° du dispositif.

Lors de la fixation par serrage due à la coopération de la pièce 7 avec la pièce filetée complémentaire, les ailes $4_1$ sont écrasées jusqu'à se trouver dans le prolongement transversal de la zone centrale de la collerette 4.

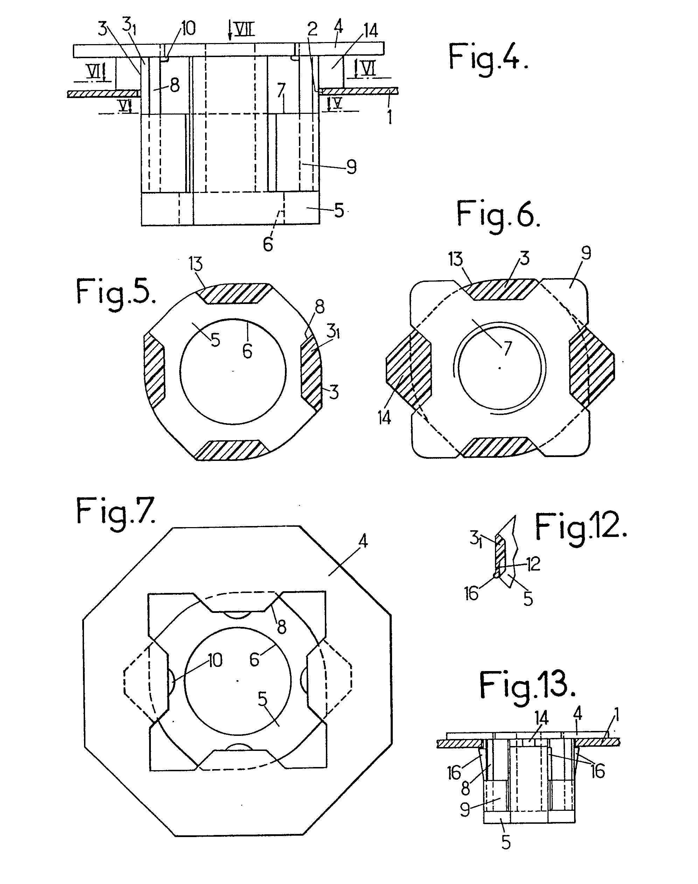

Dans chacun des autres modes de réalisation illustrés sur les fig. 4 à 11, les références identiques aux précédentes désignent les mêmes organes ou portions d'organes que précédemment.

Le mode de réalisation des fig. 4 à 7 diffère de celui des fig. 1 à 3 par deux dispositions.

Selon la première disposition, illustrée sur les fig. 5 et 6, les rotations de 45° du dispositif après son introduction axiale dans le trou carré 2 ne sont pas rendues possibles en amincissant une moitié de chaque paroi $3_1$ de la douille, mais en donnant à la face extérieure de cette moitié une forme cylindrique centrée sur l'axe de cette douille, comme bien visible en 13.

Selon la deuxième disposition, la collerette 4 ne comporte plus d'ailes flexibles, mais deux bossages 14 faisant radialement saillie vers l'extérieur de la douille 3 au voisinage axial de la collerette 4.

Le profil extérieur de ces bossages 14 a la même forme de dièdre à angle droit que celui des extrémités des oreilles 9, avec une arête biseautée ou arrondie. Mais cette forme est légèrement plus grande pour lesdites bossages que pour lesdites oreilles de façon que les premiers puissent coopérer sans jeu avec deux coins diagonalement opposés du trou carré 2. De plus ces bossages 14 sont décalés de 45° autour de l'axe de la cage par rapport aux oreilles 9 (voir fig. 6).

Avec une telle construction, la mise en place de la cage sur la tôle s'effectue en trois temps:

– on introduit d'abord axialement dans le trou carré 2 la cage, contenant la pièce 7, avec le contour du croisillon de cette dernière orienté parallèlement au contour du trou 2, et ce jusqu'à butée axiale des bossages 14 contre la face extérieure de la tôle 1,
– on fait alors tourner de 45° l'ensemble de la cage et de la pièce à croisillon, ce qui amène les bossages 14 axialement en regard de deux coins diagonalement opposés du trou 2,
– et l'on introduit alors axialement ces deux bossages dans ces deux coins.

Cette dernière introduction axiale est rendue difficilement réversible du fait que les bossages sont introduits légèrement à force dans les coins complémentaires: cette irréversibilité peut être renforcée en prévoyant sur les bossages une nervure transversale venue de moulage avec ceux-ci et faisant légèrement saillie sur ces derniers.

Une autre manière de renforcer ladite irréversibilité de l'introduction axiale des bossages 14 dans deux coins diagonalement opposés du trou carré 2 consiste à prévoir extérieurement sur l'une au moins des quatre parois $3_1$ de la douille, de préférence sur chacune de ces parois, une nervure longitudinale 16 (fig. 12 et 13) définie comme suit:

– cette nervure s'étend le long du bord «arrière» de la paroi considérée $3_1$, le mot «arrière» devant être considéré par rapport au sens de rotation horaire ou de vissage (F, fig. 2) si l'on observe axialement une section transversale de la douille, au niveau de la susdite paroi, depuis le côté de cette douille comprenant sa collerette 4, c'est-à-dire selon la flèche VII de la fig. 4,

– l'épaisseur radiale de ladite nervure croît progressivement selon la direction axiale, en sens inverse de la flèche VII, depuis le plan transversal de la douille correspondant à la face frontale, de la pièce filetée 7, la plus proche de la collerette, lorsque cette pièce est logée au fond de la douille, jusqu'à une très petite distance (par exemple 0,3 mm) des bossages 14, l'épaisseur radiale maximum de cette nervure étant elle-même assez faible, et par exemple de l'ordre de 0,5 mm.

La portion «arrière», au sens qui vient d'être défini, de la paroi $3_1$ ainsi nervurée extérieurement est de préférence elle-même amincie intérieurement en 12, ainsi qu'il a été décrit plus haut en référence à la fig. 2.

La présence des nervures 16 en question assure:

– d'une part, une certaine retenue angulaire de la douille à la fin de son déplacement angulaire de 45° et alors même que ses bossages 14 ne sont pas encore enfoncés axialement dans les coins du trou carré 2,

– d'autre part, et surtout, une retenue axiale de cette douille après ledit enfoncement, du fait de la légère détente radiale des sommets desdites nervures 16 à la fin dudit enfoncement, les faces terminales des nervures en question venant alors buter axialement contre la tôle 1.

Cette disposition suppose que l'épaisseur axiale des bossages est au moins égale à celle de la tôle 1, mais est spécialement avantageuse lorsque ces deux épaisseurs sont égales.

D'une façon connue en soi, un bourrelet annulaire (non visible sur le dessin) est avantageusement prévu à la périphérie de la collerette 4 pour assurer l'étanchéité du montage.

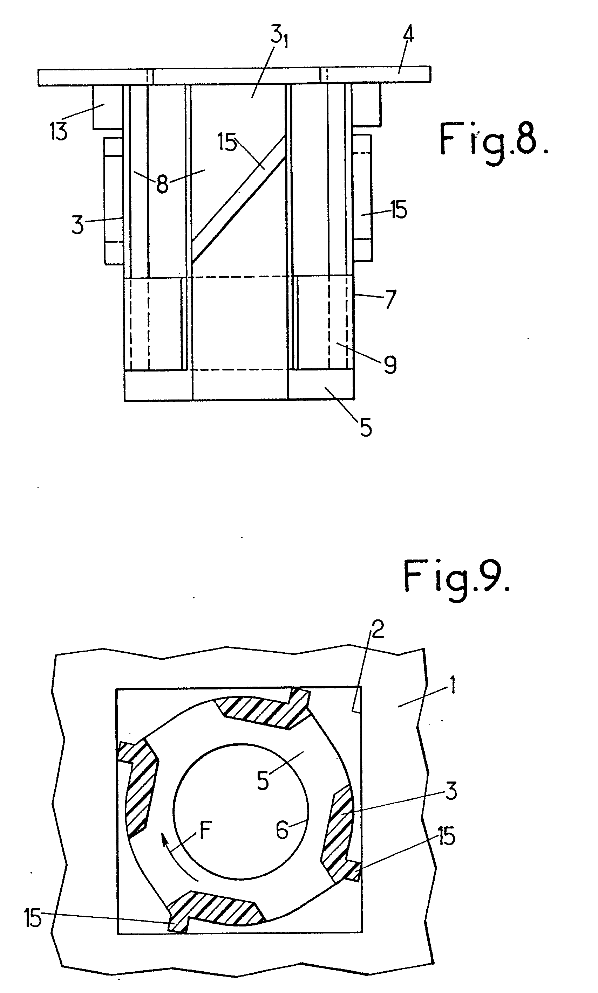

Le mode de réalisation des fig. 8 et 9 diffère essentiellement du précédent par la façon dont sont obtenues les rotations de 45° de la cage et de la pièce 7 qu'elle contient.

Dans ce cas en effet il devient inutile de faire tourner la cage de 45° après son introduction axiale dans le trou carré de la tôle: le déplacement angulaire en question est assuré automatiquement au cours de ladite introduction axiale elle-même grâce à la prévision de nervures obliques 15 faisant saillie extérieurement sur les parois $3_1$ de la douille.

Lors de l'introduction axiale de la cage dans le trou carré 2, ces nervures 15 viennent en contact avec les côtés de ce trou et chassent progressivement la cage dans la direction de la flèche F sur la fig. 9.

Du fait que la face extérieure de chacune des parois $3_1$ de la douille 3 présente circonférentiellement une moitié plane et une moitié incurvée cylindriquement, la nervure oblique 15 faisant saillie sur cette face est rectiligne sur la moitié de son étendue (moitié la plus proche du fond 5 sur les fig. 8 et 9) et hélicoïdale sur son autre moitié.

L'extrémité, de chaque nervure 15, la plus proche du fond 5, est biseautée de façon à faciliter son introduction axiale dans le trou carré 2.

Le profil de chaque nervure peut être de toute forme désirable, par exemple carrée comme illustré ou semicirculaire.

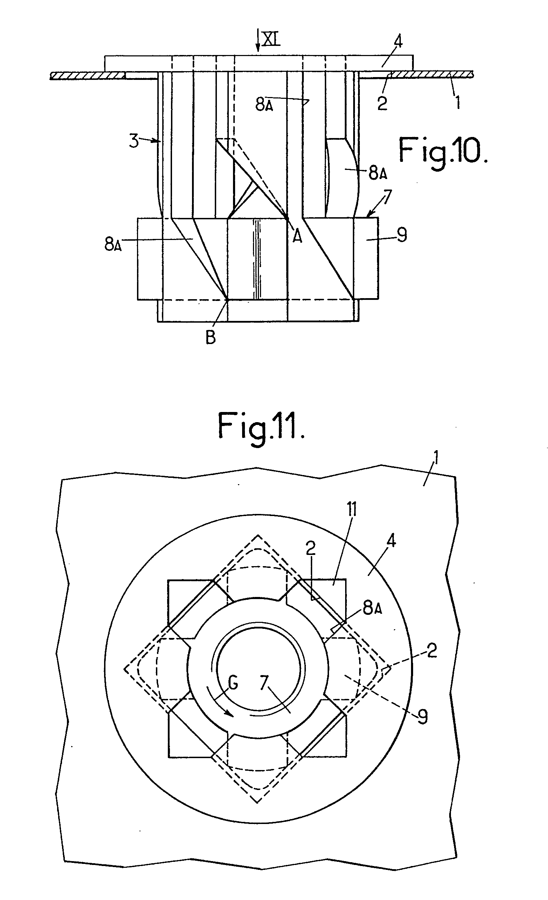

La variante des fig. 10 et 11 diffère essentiellement des précédentes en ce que les fenêtres longitudinales évidées dans les parois de la douille 3 ne s'étendent plus ici parallèlement à l'axe de cette douille, mais sont inclinées sur cet axe de façon à décrire entre leurs deux extrémités axiales un arc de 45° autour de l'axe de la douille, ainsi que visible en 8A.

Chacune de ces fenêtres 8A encadre encore jointivement une oreille 9, mais ici elle n'entre en contact latéralement avec cette oreille que le long de deux arêtes radiales A et B (fig. 10) de ladite oreille.

Avec cette variante, le montage est assuré comme suit.

On introduit d'abord axialement à fond la pièce filetée 7 à croisillon dans la cage, ce qui fait subir à cette pièce une rotation de 45° dans le sens de la flèche G (fig. 11) du fait du glissement de ses oreilles 9 contre les flancs des fenêtres obliques 8A.

Le maintien de cette pièce au fond de la douille peut être assuré par coopération avec la pièce d'aspérités appropriées (non représentées) venues de moulage avec la douille.

On introduit alors axialement la cage contenant la pièce 7 dans le trou carré 2 de la tôle après avoir orienté son croisillon parallèlement aux côtés du carré.

Cette introduction axiale se fait sans aucun déplacement angulaire et peut être verrouillée en fin de course par coopération de nervures appropriées prévues sur la face extérieure de la douille avec les bords du trou 2.

C'est ensuite au cours du vissage subséquent de la pièce 7 sur la pièce filetée complémentaire que cette pièce 7, en se rapprochant axialement de la tôle, effectue automatiquement un déplacement angulaire de 45° dans le sens inverse de la flèche G du fait du guidage de ses oreilles 9 par les flancs des fenêtres obliques 8A.

A la fin du vissage, ces oreilles 9 se trouvent bien en regard des plages 11 de la tôle 1.

En suite de quoi, et quel que soit le mode de réalisation adopté, on obtient finalement un dispositif de fixation par vissage propre à équiper les trous carrés de tôles aveugles ou analogues, dispositif dont la constitution, la mise en œuvre et les avantages résultent suffisamment de ce qui précède.

L'invention embrasse les variantes suivantes:

– celles où la collerette de la cage serait prolongée axialement par un fût coaxial à cette cage sur sa face opposée à la douille, ce fût formant une entretoise d'écartement entre la tôle perforée par le trou de montage et la pièce à fixer sur cette tôle et étant lui-même évidé par un canal propre à livrer passage à l'une des deux pièces filetées dont la coopération assure la fixation désirée,

– celles où la surface extérieure de chacune des quatre oreilles radiales 9 du croisillon ne serait pas symétrique par rapport au plan axial diamétral passant par l'arête (fictive ou réelle) du dièdre qui délimite son extrémité, mais décalée perpendiculairement à ce plan, de même que les contours des fenêtres 8 évidées dans la douille pour livrer jointivement passage à ces oreilles, de façon d'une part à faciliter le déplacement angulaire de ladite douille, après son introduction axiale dans le trou 2 de la tôle 1, dans le sens du vissage tout en rendant au contraire plus difficile son déplacement angulaire en sens inverse, et d'autre part à former automatiquement une butée angulaire à la fin de la course angulaire de 45 degrés de la douille dans le sens du vissage,

– celles où seraient prévus dans le fond de la douille des appendices élastiques venus de moulage avec cette douille et faisant saillie axialement de façon escamotable sur ce fond de façon à repousser la pièce filetée vers l'extérieur de la douille ou plus précisément vers la face cachée de la tôle équipée de ladite douille, lesdits appendices pouvant affecter la forme de lamelles rectilignes ou d'une hélice, éventuellement convergente vers le centre de la douille à la façon d'une queue de cochon,

– celles où au moins le fond 5 de la douille 3 aurait un contour différent de celui, inscriptible dans un octogone, de la portion de surface latérale de cette douille destinée à être placée axialement au niveau de la tôle lors du déplacement angulaire de 45 degrés de cette douille, le contour dudit fond ayant avantageusement la même forme carrée et la même position angulaire que le contour du croisillon de façon à faciliter l'introduction axiale de l'ensemble dans le trou carré de la tôle à équiper.

## Revendications

1. Dispositif pour fixer un objet par vissage sur une tôle aveugle ou analogue perforée par un trou (2) de montage, comprenant une cage monobloc et, dans cette cage, une pièce filetée (7) destinée à coopérer par vissage avec une pièce filetée complémentaire pour assurer la fixation désirée, ladite cage comportant une douille (3) cylindrique ou prismatique de section assez petite pour pouvoir être introduite dans le trou de montage de la tôle ou analogue, l'une des extrémité de cette douille étant prolongée transversalement par une collerette (4) propre à prendre appui sur les bords dudit trou (2) à la fin de l'introduction de ladite douille (3) dans celui-ci, caractérisé en ce que sa pièce filetée (7) comprend quatre oreilles radiales identiques (9) s'étendant selon deux directions diamétrales perpendiculaires entre elles et dont le profil est tel que le croisillon formé puisse être introduit avec un faible jeu dans le trou carré (2), en ce que la douille (3) constitutive de sa cage présente une section transversale inscriptible dans un octogone régulier lui-même propre à être introduit avec un léger jeu dans le trou carré et est évidée par quatre fenêtres longitudinales identiques (8) décalées angulairement de 90 degrés entre elles et propres à recevoir jointivement chacune l'une des quatre oreilles de la pièce filetée, et en ce que des moyens sont prévus pour rendre possible une rotation de 45 degrés de la pièce filetée dans le sens du vissage sur elle de la pièce filetée complémentaire entre l'instant de l'introduction de ladite pièce filetée dans le trou carré et au plus la fin du vissage de la pièce filetée complémentaire sur cette pièce.

2. Dispositif de fixation selon la revendication 1, pour lequel la douille se présente sous la forme générale d'un prisme à base octogonale, caractérisé en ce que les moyens pour rendre possible la rotation de 45° de la pièce filetée comprennent des amincissements pratiqués (en 12) dans l'une seulement des deux moitiés de chacune des quatre portions non évidées ($3_1$) de la paroi latérale de la douille, ces moitiés étant considérées selon une direction périphérique.

3. Dispositif de fixation selon la revendication 1, pour lequel la douille se présente sous la forme générale d'un prisme à base octogonale, caractérisé en ce que les moyens pour rendre possible la rotation de 45° de la pièce filetée comprennent, sur la face extérieure des portions de paroi latérale non évidées ($3_1$) de cette douille, des plages cylindriques arrondies (13) centrées sur l'axe de la douille, ces plages s'étendant sur une moitié, de chacune desdites portions, considérée selon une direction périphérique.

4. Dispositif de fixation selon la revendication 1, caractérisé en ce que les moyens pour rendre possible la rotation de 45° de la pièce filetée (7) comprennent des nervures obliques (15) prévues sur les faces extérieures des portions non évidées ($3_1$) de la paroi latérale de la douille, nervures propres à coopérer avec les bords du trou carré (2) de manière à chasser angulairement la douille lors de son introduction axiale dans un tel trou et à lui faire décrire automatiquement un angle de 45° au cours de cette introduction.

5. Dispositif de fixation selon la revendication 1, caractérisé en ce que les moyens pour rendre possible la rotation de 45° de la pièce filetée sont constitués par la forme inclinée donnée aux quatre fenêtres (8A) évidées dans la douille de façon telle que, lorsque les oreilles (9) de la pièce filetée glissent le long de ces fenêtres par suite du vissage de la pièce filetée complémentaire sur elle, ladite pièce décrive un angle de 45°.

6. Dispositif de fixation selon l'une quelconque des précédentes revendications, caractérisé en ce que la collerette (4) comporte au moins deux ailes élastiquement flexibles ($4_1$) pliées du côté de la douille (3) et propres à prendre appui élastiquement contre la tôle (1) évidée par le trou carré (2) à équiper.

7. Dispositif de fixation selon l'une quelconque des revendications 1 à 5, caractérisé en ce que la cage comporte deux bossages plats (14) de section droite triangulaire faisant saillie axialement sous la collerette et propres à être introduits jointivement dans deux coins opposés du trou carré à équiper (2) après que la pièce filetée (7) et la cage (3, 4) qui la contient aient subi une rotation de 45° consécutivement à leur introduction axiale dans ce trou carré.

## Patentansprüche

1. Vorrichtung zur Schraubbefestigung eines Gegenstandes an einem nur von einer Seite zugänglichen mit einer Montageöffnung (2) versehenen Blech oder dgl.
mit einem aus einem Block bestehenden käfigartigen Gehäusekörper, in dem sich ein Gewindeteil (7) befindet, das zur Herstellung der gewünschten Befestigung mit einem komplementären Gewindeteil verschraubbar ist,
wobei der Gehäusekörper eine zylindrische oder prismatische Buchse (3) aufweist, deren Querschnitt so klein ist, dass sie in die Montageöffnung (2) des Blechs oder dgl. einführbar ist,
wobei ferner einer der Endbereiche dieser Buchse (3) durch einen Kragen (4) transversal verbreitert ist, der sich bei vollständiger Einführung der Buchse (3) in die genannte Montageöffnung auf deren Rändern abstützen kann,
dadurch gekennzeichnet, dass das Gewindeteil (7) vier identisch ausgebildete radiale Lappen (9) besitzt, die sich in zwei zueinander senkrechten diagonalen Richtungen erstrecken und deren Profil so gestaltet ist, dass die von ihnen gebildete Kreuzstrebe mit geringem Spiel in die viereckige Montageöffnung (2) einführbar ist,
dass die einen Bestandteil des Gehäusekörpers bildende Buchse (3) einen in ein regelmässiges Oktogon einbeschreibbaren transversalen Querschnitt besitzt, mit dem sie mit geringem Spiel in die viereckige Montageöffnung einführbar ist,
dass an der Buchse (3) vier identisch ausgebildete, um Winkel von 90° gegeneinander versetzte longitudinale Fenster (8) ausgebildet sind, die jeweils einer der vier Lappen des mit einem Gewinde versehenen Teils (7) lückenlos aufnehmen können
und dass Mittel vorgesehen sind, die zwischen dem Zeitpunkt des Einführens des Gewindeteils (7) in die viereckige Montageöffnung (2) und spätestens dem Ende des Einschraubens des komplementären Gewindeteils in dieses Teil (7) eine 45°-Drehung des Gewindeteils (7) in Schraubrichtung ermöglichen.

2. Befestigungsvorrichtung nach Anspruch 1, bei der die Buchse die allgemeine Form eines Prismas mit oktogonaler Basis besitzt, dadurch gekennzeichnet, dass die Mittel zur Ermöglichung der 45°-Drehung des Gewindteils Ausnehmungen umfassen, die (in 12) in jedem der vier nicht mit Aussparungen versehenen Bereichen (3.1) der Seitenwandung der Buchse jeweils in nur einem der beiden in einer Umfangsrichtung aufeinander folgenden Hälften dieses Bereichs angebracht sind.

3. Befestigungsvorrichtung nach Anspruch 1, bei der die Buchse die allgemeine Form eines Prismas mit oktogonaler Basis besitzt, dadurch gekennzeichnet, dass die Mittel zur Ermöglichung der 45°-Drehung des Gewindeteils auf der Aussenfläche der nicht mit Aussparungen versehenen Bereiche (3.1) der Seitenwandung der Buchse abgerundete zylindrische Anschläge (13) umfassen, die zur Achse der Buchse zentriert sind und die sich in einer Umfangsrichtung jeweils über eine Hälfte jedes der genannten Bereiche erstrecken.

4. Befestigungsvorrichtung nach Anspruch 1, dadurch gekennzeichnet, dass die Mittel zur Ermöglichung der 45°-Drehung des Gewindeteils schräg angeordnete Rippen (15) umfassen, die auf den Aussenseiten der nicht mit Ausnehmungen versehenen Bereiche (3.1) der Seitenwandung der Buchse angebracht sind und mit den Rändern der viereckigen Montageöffnung (2) derart zusammenwirken, dass sie die Buchse bei ihrer axialen Einführung in diese Montageöffnung mit einer Winkelbewegung beaufschlagen, so dass sie im Verlauf der Einführbewegung automatisch einen Winkel von 45° beschreibt.

5. Befestigungsvorrichtung nach Anspruch 1, dadurch gekennzeichnet, dass die Mittel zur Ermöglichung der 45°-Drehung des Gewindeteils darin bestehen, dass den vier in der Buchse ausgesparten Fenstern (8) eine geneigte Form verliehen ist, derart, dass die Lappen (9) des Gewindeteils beim Einschrauben des komplementären Gewindeteils längs dieser Fenster gleitet und dabei einen Winkel von 45° beschreibt.

6. Befestigungsvorrichtung nach einem der vorhergehenden Ansprüche, dadurch gekennzeichnet, dass der Kragen (4) wenigstens zwei elastisch verformbare Flügel (4.1) besitzt, die auf Seiten der Buchse (3) abgewinkelt sind und sich elastisch gegen das mit der Montageöffnung (2) versehene und mit der Vorrichtung auszurüstende Blech (1) abstützen können.

7. Befestigungsvorrichtung nach einem der Ansprüche 1 bis 5, dadurch gekennzeichnet, dass der Gehäusekörper zwei flache Ansätze (14) mit dreieckförmigen Querschnitt besitzt, die axial unter dem Kragen herausragen und lückenlos in die beiden einander gegenüberliegenden Ecken der mit der Vorrichtung auszurüstenden Montageöffnung (2) einführbar sind, nachdem das Gewindeteil (7) und der dieses enthaltende Gehäusekörper (3, 4) nach ihrem axialen Einführen in die viereckige Montageöffnung um 45° gedreht wurden.

## Claims

1. Device for securing an object by screwing to a blind metal sheet or similar provided with a mounting hole (2), comprising a one-piece cage and, in this cage, a threaded part (7) intended to coact by screwing with a complementary threaded part so as to ensure the desired fixing, said cage comprising a socket (3) cylindrical or prismatic with a section small enough to be able to be introduced into the mounting hole of the metal sheet or similar, one of the ends of this socket being extended transversely by a collar (4) adapted to bear on the edges of said hole (2) at the end of the introduction therein of said socket (3), characterized in that its threaded part (7) comprises four identical radial tabs (9) extending in two diametrical directions perpendicular to each other and whose profile is such that the cross-head formed may be introduced with a small clearance into the square hole (2), in that the socket (3) forming its cage has a cross-section inscribable in a regular octagon itself adapted to be introduced with a slight play into the square hole and has cut out therein four identical longitudinal windows (8) offset angularly by 90° with respect to each other and adapted to receive jointly each one one of the four tabs of the threaded part, and in that means are provided for making possible a rotation through 45° of the threaded part in the direction of screwing thereon of the complementary threaded part between the moment when said threaded part is introduced into the square hole and at most the end of the screwing of the complementary threaded part on said part.

2. Securing device according to claim 1, in which the socket has the general shape of a prism with an octagonal base, characterized in that the means for making possible the rotation through 45° of the threaded part comprise thinned-down portions formed (at 12) in only one of the two halves of each of the four noncut-out portions $(3_1)$ of the lateral wall of the socket, these halves being considered in a peripheral direction.

3. Securing device according to claim 1, in which the socket has the general shape of a prism with an octagonal base, characterized in that the means for making possible the rotation through 45° of the threaded part comprise, on the outer face of the noncut-out lateral wall portions $(3_1)$ of this socket, cylindrical rounded areas (13) centred on the axis of the socket, these areas extending over half, of each of said portions, considered in a peripheral direction.

4. Securing device according to claim 1, characterized in that the means for making possible the rotation through 45° of the threaded part (7) comprise oblique ribs (15) provided on the outer faces of the noncut-out portions $(3_1)$ of the side wall of the socket, which ribs are adapted to cooperate with the edges of the square hole (2) so as to drive the socket angularly during its axial introduction into such a hole and to cause it to describe automatically an angle of 45° during this introduction.

5. Securing device according to claim 1, characterized in that the means for making possible the rotation through 45° of the threaded part are formed by the inclined shape given to the four windows (8A) cut out in the socket so that, when the tabs (9) of the threaded part slide along these windows consequent to the screwing of the complementary threaded part thereon, said part describes an angle of 45°.

6. Securing device according to any one of the preceding claims, characterized in that the collar (4) comprises at least two resiliently flexible wings $(4_1)$ bent on the side of the socket (3) and adapted to bear resiliently against the metal sheet (1) provided with the square hole (2) to be equipped.

7. Securing device according to any one of claims 1 to 5, characterized in that the cage comprises two flat bosses (14) triangular in cross-section projecting axially under the collar and adapted to be introduced jointly into two opposite corners of the square hole to be equipped (2) after the threaded part (7) and the cage (3, 4) which contains it have undergone a rotation through 45° subsequent to their axial introduction into this square hole.

Fig.1.

Fig.2.

Fig.3.

Fig.4.

Fig.6.

Fig.5.

Fig.7.

Fig.12.

Fig.13.

Fig.8.

Fig.9.

Fig.10.

Fig.11.